# EUROPÄISCHE PATENTSCHRIFT

(11) **EP 2 699 799 B1**
(45) Veröffentlichungstag und Bekanntmachung des Hinweises auf die Patenterteilung: **28.01.2015**
(21) Anmeldenummer: 12715601.6
(22) Anmeldetag: 11.04.2012
(51) Int. Cl.: F03D 11/00

(54) **MASCHINENTRÄGER EINER WINDENERGIEANLAGE MIT VERKABELUNG UND VERFAHREN ZUM VERLEGEN EINES KABELSTRANGS AN EINEM MASCHINENTRÄGER EINER WINDENERGIEANLAGE**
MAINFRAME OF A WIND TURBINE GENERATOR SYSTEM WITH CABLING AND METHOD FOR LAYING A LOOM OF CABLES ON A MAINFRAME OF A WIND TURBINE GENERATOR SYSTEM
SUPPORT MACHINE À CÂBLAGE D'UNE ÉOLIENNE ET PROCÉDÉ DE POSE D'UN FAISCEAU DE CÂBLES SUR UN SUPPORT MACHINE D'UNE ÉOLIENNE

(30) Priorität: 21.04.2011 DE 102011007836
(43) Veröffentlichungstag der Anmeldung: 26.02.2014
(73) Patentinhaber: Senvion SE, 22297 Hamburg (DE)
(72) Erfinder: WEHNSEN, Henning, 24814 Shestedt (DE); WINKLER, Andreas, 24783 Osterrönfeld (DE); JUNGBLUTH, Rainer, 24837 Tolk (DE)
(74) Vertreter: Seemann & Partner
(86) Internationale Anmeldenummer: PCT/EP2012/001565
(87) Internationale Veröffentlichungsnummer: WO 2012/143099

(56) Entgegenhaltungen:
- WO-A1-2006/032515
- DE-A1-102007 009 575
- DE-A1-102008 052 412

## Beschreibung

Die Erfindung betrifft einen Maschinenträger einer Windenergieanlage mit Verkabelung, eine entsprechende Windenergieanlage sowie ein Verfahren zum Verlegen eines Kabelstrangs an einem Maschinenträger einer Windenergieanlage

Windenergieanlagen weisen üblicherweise einen Turm auf, an dessen Spitze eine Gondel mit einem Rotor mit einer Rotornabe mit Rotorblättern angeordnet ist, der im Betrieb einen Generator antreibt. Die Gondel beherbergt Maschinenteile wie Lager, Wellen und den Generator, Elektronik- und Schaltkästen sowie gegebenenfalls ein Getriebe. Die Maschinenteile werden von einer Bodenplattform bzw. einem Maschinenträger getragen, der auf dem Turm drehbar gelagert ist.

Der Maschinenträger überträgt im vorderen Teil die gesamten Rotorkräfte über die Azimutlagerung auf den Turm, nimmt die schweren Lasten der Maschinenteile auf und ist entsprechend steif und massiv gebaut. In vielen Fällen bestehen moderne Maschinenträger aus einem Hauptträger und einem Heckträger, die geschweißt oder gegossen sein können. Der Hauptträger ist stark dynamisch belastet, während die Hauptaufgabe des Heckträgers, der mit dem Hauptträger an dessen Heckseite verbunden ist, darin liegt, das Gewicht des Generators und gegebenenfalls eines Transformators, eines Umrichters und von Schaltschränken zu tragen. Beim Heckträger ist das Belastungsniveau daher weniger hoch als bei dem hochbeanspruchten Hauptträger. Wichtiger ist hier die Steifigkeitsauslegung, da der Generator genau mit dem Getriebe fluchten muss. Dynamische Belastungen des Heckträgers resultieren vor allem aus Schwingungen und Trägheitskräften.

Hauptträger werden derzeit bei vielen Windenergieanlagen als Gussteile aus Gusseisen gefertigt, also als Abguss in einem Gussverfahren hergestellt. Dies hat den Vorteil, dass auch komplizierte Formen leicht herstellbar sind. Außerdem hat das Gussmaterial schwingungsdämpfende Eigenschaften, die ein Schweißteil aus Stahl nicht hat. Dies ist in einer Gondel einer Windenergieanlage, in der starke Schwingungen und somit auch starke Schallabstrahlungen entstehen können, vorteilhaft. Gusseisen hat bei geringerer Dichte als Stahl außerdem eine gute Druckfestigkeit und aufgrund seiner Versprödung eine gute Formsteifigkeit, was es für die Anwendung als Maschinenträger besonders geeignet macht. Ein Beispiel eines geeigneten Gusseisens ist Gusseisen mit Kugelgraphit, d. h. sphärischen Graphiteinlagerungen, welches zusätzlich eine vergleichsweise hohe Zugfestigkeit aufweist.

Der Heckträger kann, wie in einigen Fällen auch der Hauptträger, aus Kostengründen ein Schweißteil sein, das heißt aus mehreren Stahlteilen, also Stahlträgern, Stahlrohren und Stahlblechen, insbesondere aus Walzstahl, zusammengeschweißt sein. Wegen der höheren Zug- und Bruchfestigkeit des Stahls gegenüber Gusseisen weist der Heckträger bei gleicher Belastbarkeit ein geringeres Gewicht auf.

Da Gusseisen nicht schweißbar ist, ist die Verbindung zwischen dem Hauptträger und dem Heckträger üblicherweise als Flanschverbindung ausgebildet. Hierzu ist der Heckträger an den Maschinenträger mittels geeigneter Schraubverbindungen angeflanscht. Flanschverbindungen benötigen relativ viel Platz und können aufgrund der engen Platzverhältnisse in einer Gondel schwer zugänglich sein.

Eine spezielle Art eines Maschinenträgers ist in DE 10 2007 009 575 A1 beschrieben. Dieses Dokument offenbart eine Windenergieanlage mit einem Maschinenhaus, bei dem ein Maschinenträger einen Grundkörper und einen Generatorträger aufweist. Der Grundkörper ist zweiteilig aufgebaut, nämlich mit einem Grundkörper und einem Bodenelement, das einen oder mehrere Azimutantriebe trägt. Der Generatorträger ist am Bodenelement angeordnet. Das als Wanne zum Auffangen von Flüssigkeiten wie beispielsweise Getriebeöl ausgebildete Bodenelement bildet eine Struktur, die das Maschinenhaus zum Turm hin abschließt. In der Wanne sind Durchbrechungen angeordnet, die als Mannloch und zur Kabeldurchführung in den Turm dienen.

Ein alternatives Verbindungsverfahren ist in der Patentanmeldung DE 10 2010 002 828.2 der Anmelderin beschrieben, deren Offenbarungsgehalt vollinhaltlich in der vorliegenden Patentanmeldung aufgenommen sein soll. Der darin beschriebene Maschinenträger für eine Windenergieanlage weist einen im Wesentlichen als Gussteil ausgebildeten Hauptträger und einen im Wesentlichen als Schweißteil ausgebildeten Heckträger auf, wobei wenigstens ein schweißfähiges Eingussteil vorgesehen ist, das teilweise in ein heckseitiges gegossenes Verbindungsstück des Hauptträgers eingegossen ist und außerhalb des Verbindungsstücks des Hauptträgers mit dem Heckträger verbunden ist, insbesondere mittels einer Schweißverbindung.

Bei modernen Windenergieanlagen, die Nennleistungen von mehreren Megawatt (MW) haben, wird eine Verkabelung des Generators und der weiteren elektrischen Komponenten zwischen dem Turm und den insbesondere auf dem Heckträger gelagerten elektrischen Komponenten über den Hauptträger geführt. Beispielsweise bei der Verwendung von doppelt gespeisten Asynchrongeneratoren, bei denen ein Teil der Leistung vom Stator des Generators und ein anderer Teil der Leistung vom Rotor abgenommen wird, und zu jeder der drei Phasen des Stroms jeweils drei Leistungskabel verwendet werden, ergibt sich eine Gesamtdicke eines entsprechenden Leistungskabelstranges von bis zu einigen Dutzend Zentimetern. Diese Kabel werden auf dem Maschinenträger zwischen den auf dem Maschinenträger gelagerten Komponenten hindurch verlegt. Neben den Leistungskabeln werden auch Steuerkabel verlegt, mit denen Steuer- und Messsignale übertragen werden. Zu diesen Kabeln gehören auch die Stromversorgungskabel für die elektrischen Komponenten, Computer usw. Die Vielzahl der zu verlegenden Kabel sowie die beengten Platzverhältnisse in der Gondel der Windenergieanlage führen dazu, dass Wartungsarbeiten in der Gondel aufgrund von Stolpergefahr erschwert werden. Außerdem müssen Kabel aufwändig verkleidet bzw. durch Bereiche der Gondel, z.B. unter dem Getriebe geführt werden, die ohnehin schon Engstellen darstellen.

Demgegenüber liegt die Aufgabe der vorliegenden Erfindung darin, eine Verkabelung der elektrischen Komponenten einer Windenergieanlage zu schaffen, die sowohl eine sichere und bequeme Wartung sowohl der Verkabelung als auch der elektrischen Komponenten in der Gondel der Windenergieanlage als auch eine sichere elektrische Verbindung sowohl von Leistungskabeln als auch von Steuerkabeln unter Vermeidung von Engstellen ermöglicht.

Diese Aufgabe wird durch einen Maschinenträger einer Windenergieanlage mit Verkabelung gelöst, wobei der Maschinenträger einen Hauptträger und einen Heckträger aufweist, der an wenigstens einer Verbindungstelle mit dem Hauptträger an dessen Heckseite verbunden ist, wobei die Verkabelung wenigstens ein Kabel und/oder wenigstens einen Kabelstrang mit Leistungskabeln und/oder mit Steuerkabeln aufweist, das und/oder der zwischen dem Hauptträger und dem Heckträger verlegt ist, wobei der Maschinenträger dadurch weitergebildet ist, dass in der Verbindungsstelle eine Aussparung angeordnet ist, durch die das wenigstens eine Kabel und/oder der wenigstens eine Kabelstrang verlegt ist.

Unter einer Aussparung in der Verbindungsstelle wird insbesondere eine Öffnung, die teilweise oder vollständig umschlossen ist, in der Verbindungsstelle verstanden. Sie liegt damit unterhalb der Oberseite des Maschinenträgers. Die erfindungsgemäße Maßnahme bedeutet somit, dass die Kabel bzw. die Kabelstränge im Inneren des Maschinenträgers, d.h. des Heckträgers und des Hauptträgers, verlegt werden anstatt, wie bisher, oberhalb bzw. auf der Oberseite des Maschinenträgers oder mittig zwischen den Tragarmen des Heckträgers. Bis auf die Stellen, an denen die Kabel bzw. Kabelstränge aus dem Heckträger herausgeführt werden, um mit dem Generator bzw. den anderen elektrischen Komponenten auf dem Heckträger verbunden zu werden, verlaufen die Kabel bzw. Kabelstränge somit vollständig unterhalb der Ebene, auf der sämtliche Maschinenteile, insbesondere Triebstrang, Getriebe und elektrische Komponenten, angeordnet sind und somit unterhalb des Bereiches, in dem Wartungsarbeiten und Reparaturarbeiten ausgeführt werden. Sämtliche mechanischen und elektrischen Komponenten, die auf dem Maschinenträger angeordnet sind, sind somit störungsfrei durch Wartungspersonal erreichbar und einsehbar. Die besondere Erkenntnis der Erfindung liegt darin, eine entscheidende Verbesserung der räumlichen Verhältnisse zu erreichen, indem die Kabelstränge durch die hochbelasteten Verbindungsstellen geführt werden.

Die Nutzung von Aussparungen an den Verbindungsstellen, die von Aussparungen in den Strukturen des Heckträgers und des Hauptträgers an den Verbindungsstellen gebildet werden, hat den Vorteil, dass die Kabel und Kabelstränge dicht an den mechanischen Strukturen von Heckträger und Hauptträger entlang geführt werden und somit auch innerhalb der Maschinenträgerkonstruktion gut befestigbar sind und nicht oder kaum frei geführt werden, wodurch Beschädigungen der Kabel oder Kontaktverluste verhindert werden können. Außerdem dienen die Aussparungen als natürliche Engstellen, die eine besonders geeignete Bündelung und Befestigung von Kabeln bzw. Kabelsträngen erlauben. Unter einem Kabelstrang wird im Rahmen der Erfindung auch ein Kabelbaum verstanden.

Unter Leistungskabeln und Steuerkabeln werden sowohl Starkstrom führende Kabel als auch Steuerkabel, Stromversorgungskabel und sämtliche weiteren Kabel, die in einer Gondel einer Windenergieanlage verwendet werden, im Rahmen der Erfindung verstanden.

Vorteilhafterweise ist der Heckträger mittels eines Schraubenflansches mit dem Hauptträger verbunden oder an den Hauptträger angeschweißt. In beiden Fällen ist es möglich, vorhandene Aussparungen an den entsprechenden Verbindungsstellen erfindungsgemäß zum Durchführen von Kabeln und/oder Kabelsträngen zu verwenden.

Ein Schraubenflansch oder eine Schweißverbindungsstelle eines Hauptträgers oder eines Heckträgers ist vorzugsweise im Wesentlichen C-förmig, U-förmig oder als geschlossener Querschnitt mit allseits umschlossener Aussparung ausgeführt. Diese Formen ermöglichen sowohl eine dauerhafte und stabile Verbindung als auch die Ausbildung einer Aussparung, die an zwei, drei oder mehr Seiten umschlossen ist. Dafür sind auch Verbindungen geeignet, die an zwei Seiten, beispielsweise oberhalb und unterhalb der Aussparung oder oberhalb und einseitig neben der Aussparung, also winkelförmig, angeordnet sind.

Eine stabile und vorteilhafte Ausbildung besteht darin, dass an zwei gegenüberliegenden Seiten Verbindungsstellen zwischen Hauptträger und Heckträger angeordnet sind. Es können auch drei oder mehr Verbindungsstellen vorgesehen sein, die entweder in einer Ebene nebeneinander oder in mehreren Ebenen verteilt liegen. Hierzu ist vorzugsweise in einer Weiterbildung vorgesehen, dass beide oder mehrere Verbindungsstellen Aussparungen mit hindurch verlegten Kabeln oder Kabelsträngen aufweisen, wobei insbesondere Leistungskabel und Steuerkabel getrennt voneinander durch verschiedene Verbindungsstellen verlegt sind. Die Trennung von Leistungskabeln und Steuerkabeln verhindert zuverlässig das Einstreuen von Störungen aus den Leistungskabeln in die Steuerkabel, die die Steuerung der Windenergieanlage stören könnten.

Vorzugsweise durchläuft wenigstens ein Kabel eine Verbindungsstelle bruchlos und/oder ist wenigstens ein Kabel im Heckträger an oder im Bereich einer Verbindungsstelle mit einem Kabel im Hauptträger mittels eines Steckkontakts verbunden. Ein solches Kabel kann auch Teil eines Kabelstrangs sein. In einem solchen Fall sind insbesondere vorzugsweise sämtliche Kabel eines Kabelstrangs im Heckträger mit den entsprechenden Kabeln eines Kabelstrangs im Hauptträger mittels Steckkontakten oder eines gemeinsamen Steckkontaktes an oder im Bereich einer Verbindungsstelle verbunden. Hierzu kann am Heckträger oder am Hauptträger auch ein Steckverbindungspaneel für eine Vielzahl von Steckverbindungen vorgesehen sein, das eine geordnete Verbindung der Kabel im Heckträger und der Kabel im Hauptträger miteinander vereinfacht.

Eine besonders vorteilhafte Weiterbildung des Maschinenträgers sieht vor, dass wenigstens eine Kabelschiene für den oder die Kabelstränge im Hauptträger und/oder im Heckträger angeordnet ist, wobei insbesondere die wenigstens eine Kabelschiene eine Verbindungstelle zwischen Hauptträger und Heckträger durchläuft oder eine Kabelschiene im Hauptträger und eine Kabelschiene im Heckträger an oder im Bereich einer Verbindungsstelle aufeinander stoßen. Unter einer Kabelschiene wird im Rahmen der Erfindung eine offene oder eine geschlossene Kabelschiene, insbesondere ein Kabelkanal, verstanden. Eine geschlossene Kabelschiene kann auch eine Kabelschiene mit Seitenwänden und Deckel, der abnehmbar sein kann, sein. Auch einfache Kabelschienen mit einer Leiterstruktur sind erfindungsgemäß einsetzbar. Sie haben den Vorteil eines vergleichsweise geringen Gewichts und einer guten Zugänglichkeit der darauf geführten Kabel und Kabelstränge. Bevorzugt sind Kabelschienen sowohl im Heckträger als auch im Hauptträger vorhanden. Solche Kabelschienen können entweder nach dem Zusammensetzen des Maschinenträgers aus Hauptträger und Heckträger eingebaut werden und die Verbindungsstelle als Ganzes durchlaufen, oder die Kabelschienen werden zunächst separat im Hauptträger und im Heckträger angebracht, so dass sie nach dem Zusammensetzen von Hauptträger und Heckträger zum Maschinenträger an oder im Bereich der jeweiligen Verbindungsstelle aufeinander stoßen.

Im Heckträger, der üblicherweise aus Stahlträgern, Stahlrohren und ähnlichem zusammengeschweißt ist, kann eine Kabelschiene so befestigt werden, dass an den gewünschten Stellen beispielsweise Schraubösen für die Kabelschiene an die entsprechenden Teile des Heckträgers angeschweißt werden. In dem Fall, dass bei einem Hauptträger geschweißte Teile verwendet werden in Bereichen, in denen Kabelschienen verlegt werden sollen, ist die gleiche Vorgehensweise möglich. Falls der Hauptträger an diesen Stellen aus einem gegossenen Material besteht, kann in der Form eine glatte Wand vorgesehen sein, die nach dem Gießen mit mit Gewindebohrungen versehenen Sacklöchern versehen wird. In diese Sacklöcher können dann Schraubverbindungen für die Kabelschienen eingefügt werden.

Die der Erfindung zugrunde liegende Aufgabe wird außerdem durch eine Windenergieanlage mit einem vorbeschriebenen erfindungsgemäßen Maschinenträger mit Verkabelung gelöst.

Die der Erfindung zugrunde liegende Aufgabe wird ferner durch ein Verfahren zum Verlegen eines Kabels und/oder eines Kabelstrangs an einem, insbesondere vorbeschriebenen erfindungsgemäßen, Maschinenträger einer Windenergieanlage gelöst, wobei aus einem Hauptträger und einem Heckträger durch Verbinden an wenigstens einer Verbindungsstelle an einer Heckseite des Hauptträgers ein Maschinenträger hergestellt wird, wobei das Verfahren dadurch weitergebildet ist, dass durch eine Aussparung in der Verbindungsstelle wenigstens ein Kabel und/oder wenigstens ein Kabelstrang mit Leistungskabeln und/oder mit Steuerkabeln verlegt wird. Dieses erfindungsgemäße Verfahren führt zu dem erfindungsgemäßen vorstehend beschriebenen Maschinenträger mit erfindungsgemäßer Verkabelung und hat daher die gleichen Vorteile wie der erfindungsgemäße Maschinenträger. In der Herstellung des Maschinenträgers bzw. dem Verlegen der Verkabelung hat diese Vorgehensweise den Vorteil, dass sie unabhängig von bereits installierten Maschinenkomponenten auf der Oberseite des Maschinenträgers bzw. von noch zu installierenden Maschinenkomponenten erfolgt und somit eine schnelle und unkomplizierte Verlegungsmethode darstellt.

Das Verbinden von Hauptträger und Heckträger erfolgt vorzugsweise durch Verschrauben von Schraubenflanschen oder durch Verschweißen.

Vorteilhafterweise werden mehrere Kabel und/oder Kabelstränge getrennt voneinander durch verschiedene Verbindungsstellen zwischen Hauptträger und Heckträger verlegt, insbesondere Leistungskabel getrennt von Steuerkabeln. So werden Störungen, die von Leistungsspitzen in den Leistungskabeln ausgehen und die auf die Steuerkabel wirken, minimiert.

In einer bevorzugten Ausbildung des Verfahrens wird wenigstens ein Kabel bruchlos durch eine Verbindungsstelle verlegt und/oder wird wenigstens ein Kabel im Hauptträger mittels eines Steckkontakts an oder im Bereich der Verbindungsstelle mit wenigstens einem Kabel im Heckträger verbunden. Im Rahmen der Erfindung ist auch vorgesehen, dass einige Kabel bruchlos die Verbindungsstellen durchlaufen, während andere Kabel eine Kontaktstelle zwischen Heckträger und Hauptträger aufweisen. Dies kann nach den Gegebenheiten der elektrischen Komponenten und der Vorgehensweise beim Herstellen der Verkabelung frei gewählt werden. Eine bruchlose Kabelführung hat den Vorteil einer störungsfreien Kabelverlegung und einer Vermeidung von Kontaktstellen, die potenzielle Leitungsunterbrechungen bedeuten. Die Verwendung von Steckkontakten oder Paneelen mit Steckkontakten hat den Vorteil der Flexibilität und der Möglichkeit, Kabel bereits am Heckträger und am Hauptträger zu verlegen, bevor diese zu einem Maschinenträger zusammengefügt werden.

Vorzugsweise werden vor oder nach dem Verbinden von Hauptträger und Heckträger Kabelschienen für die Kabel und/oder Kabelstränge am Hauptträger und/oder am Heckträger befestigt, die Hauptträger und/oder Heckträger durchlaufen oder an oder im Bereich einer Verbindungsstelle zwischen Hauptträger und Heckträger aufeinander stoßen. Die Kabelschienen sind in diesem Fall so angeordnet, dass die Verlegung der Kabel bzw. Kabelstränge jeweils durch die Aussparung an den Verbindungsstellen erfolgt.

Vorteilhafterweise wird das wenigstens eine Kabel und/oder der wenigstens eine Kabelstrang vor oder nach dem Verbinden von Hauptträger und Heckträger zum Maschinenträger durch die wenigstens eine Aussparung der wenigstens einen Verbindungsstelle verlegt.

Außerdem ist vorteilhafterweise vorgesehen, dass das Verlegen des wenigstens einen Kabels und/oder des wenigstens einen Kabelstrangs am Boden, beispielsweise in einer Werkhalle, und/oder in einer Gondel einer Windenergieanlage erfolgt. Das Verlegen am Boden, insbesondere in einer Werkhalle, hat den Vorteil, dass genügend Platz und Bewegungsfreiheit zum Verlegen von Kabeln bzw. Kabelsträngen vorhanden ist. Das Verlegen von Kabeln oder Kabelsträngen in der an der Spitze eines Turms angeordneten Gondel hat den Vorteil, dass weniger Gewicht mittels eines Krans auf die Spitze einer Windenergieanlage gehievt werden muss. Es ist auch möglich, einen Teil oder einen Großteil der Verkabelung ebenerdig zu verlegen und beispielsweise nachträgliche Verkabelung auch noch in der Gondel zu verlegen.

Die zu den Erfindungsgegenständen, d.h. dem Maschinenträger, der Windenergieanlage und dem Verfahren genannten Merkmale, Eigenschaften und Vorteile gelten uneingeschränkt auch für die jeweils anderen Erfindungsgegenstände. Dies gilt außerdem auch für einen erfindungsgemäßen Hauptträger bzw. für einen erfindungsgemäßen Heckträger, die jeweils bereits vor dem Verbinden zu einem Maschinenträger ausgerüstet sein können, um Kabel oder Kabelstränge aufzunehmen und zu Aussparungen in Verbindungsstellen zum jeweils anderen Trägerteil zu führen, insbesondere mittels vorbereiteten Kabelschienen oder anderen Befestigungselementen für Kabel oder Kabelstränge.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Gondel einer Windenergieanlage,
- Fig. 2: eine schematische Darstellung eines Maschinenträgers,
- Fig. 3: eine schematische Darstellung eines Hauptträgers und eines Heckträgers,
- Fig. 4: eine schematische Darstellung des Hauptträgers gemäß Fig. 2 und 3,
- Fig. 5: eine schematische Darstellung des Heckträgers gemäß Fig. 2 und 3 und
- Fig. 6: eine schematische Perspektivdarstellung des Maschinenträgers gemäß Fig. 2 und 3 mit Kabelschienen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

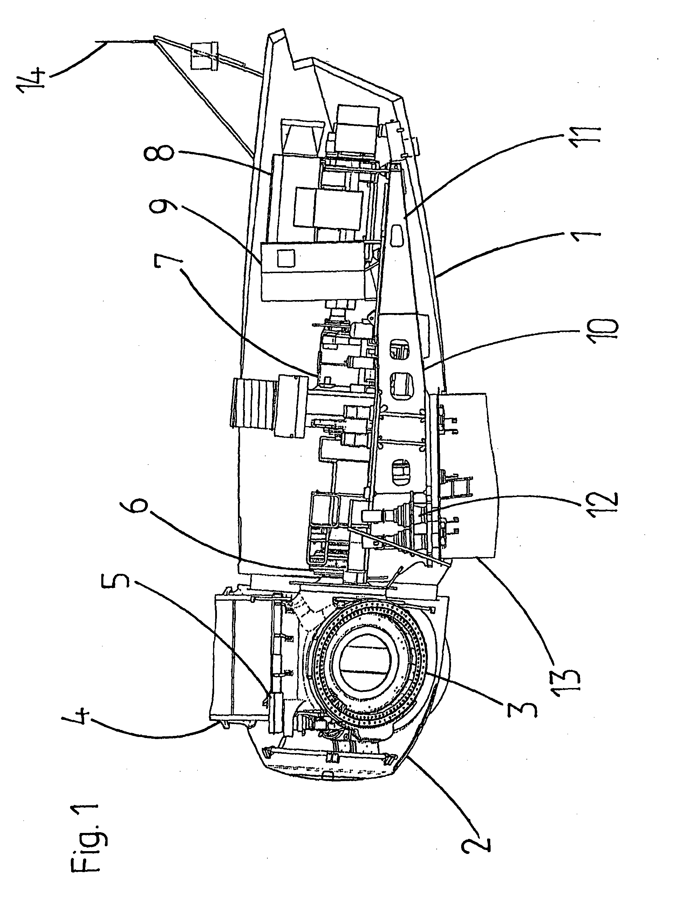

In Fig. 1 ist eine Gondel 1 einer Windenergieanlage schematisch von der Seite dargestellt. An die Gondel 1 schließt sich eine Rotornabe 2 mit drei Rotorblattanschlüssen 3 für Rotorblätter 4 an. Ein Rotorblatt 4 ist mit seinem blattwurzelseitigen Ende dargestellt. Die Rotorblattanschlüsse 3 weisen jeweils Flansche zum Anschluss eines Rotorblatts 4 und Blattwinkelverstellvorrichtungen zur Einstellung und Feststellung des Rotorblattwinkels auf. Ein Flansch ist mit dem Bezugszeichen 5 versehen.

Innerhalb der Gondel 1 schließt sich an die Rotornabe 2 eine Lagerung 6 einer langsamen Rotorwelle an, die direkt mit der Rotornabe 2 verbunden ist. Die langsame Welle ist mit einem Getriebe 7 verbunden, mit dem die Drehzahl der langsamen Rotorwelle heraufgesetzt und auf eine schnelle Welle übertragen wird. Die schnelle Welle, die sich an das Getriebe 7 anschließt, führt zu einem Generator 8, der am heckseitigen Ende der Gondel 1 angeordnet ist. Ebenfalls dargestellt ist ein Schaltschrank 9, der elektrische Komponenten aufweist. Es kann auch ein Umrichter in der Gondel vorgesehen sein, der den durch den Generator 8 erzeugten elektrischen Strom so anpasst, dass er in ein privates oder öffentliches Stromnetz eingespeist werden kann.

Im unteren Bereich der Gondel 1 ist ein Maschinenträger mit einem Hauptträger 10 und einem Heckträger 11 dargestellt. Der Hauptträger 10 unterstützt die Lagerung 6 der langsamen Welle sowie die Rotornabe 2 und das Getriebe 7. Der Heckträger 11 trägt elektrische Komponenten wie den Generator 8, Steuerungs- und Schaltschränke sowie gegebenenfalls einen Transformator und den Umrichter 9. Zur azimutalen Drehung, dass heißt zur Drehung der Gondel 1 auf der Längsachse des Turms 13, sind am Hauptträger 10 Azimutantriebe 12 angeordnet, die über ein Zahnrad und Zahnkranzgetriebe die Gondel 1 auf dem Turm 13 drehen.

Die Gondel 1 verfügt an ihrem heckseitigen Ende außerdem über Windsensorik und einen Blitzschutz 14. Ein weiterer, nicht dargestellter Blitzschutz ist üblicherweise im Bereich des Übergangs zwischen der Gondel 1 und der Rotornabe 2 angeordnet, um Blitzeinschläge aus dem Rotorblatt in den Turm abzuleiten.

Der Hauptträger 10 ist bevorzugt aus einem Gusskörper und/oder aus Stahl hergestellt, der eine ausreichende Festigkeit zum Tragen der auf dem Hauptträger 10 ruhenden Komponenten aufweist und dessen vergleichsweise weiche Materialeigenschaften zu einer Dämpfung von Schwingungen, die während des Betriebs der Windenergieanlage fortwährend auftreten, gut geeignet ist. Insbesondere ist der Gussträger durch seine kerbfreie Geometrie besonders widerstandsfähig gegenüber Ermüdungsbelastungen, die aus dem Rotor in den Turm übertragen werden müssen.

Der Heckträger ist bevorzugt aus Stahlteilen geschweißt und nimmt die Gewichtskräfte und Drehmomente des Generators 8 sowie des Schaltschranks 9 auf und überträgt sie mittels einer Verbindung zwischen dem Hauptträger 10 und dem Heckträger 11 auf den Hauptträger 10 und den Turm 13. Der Heckträger 11 ist als einseitig eingespannter Kragarm ausreichend steif ausgeführt, so dass ein Einfedern des Generators 8 im Betrieb sicher vermieden wird. In einer alternativen Ausführungsform kann der Stahlträger auch als Gussteil ausgeführt sein, was insbesondere bei großen Stückzahlen eine wirtschaftliche Herstellung ermöglicht.

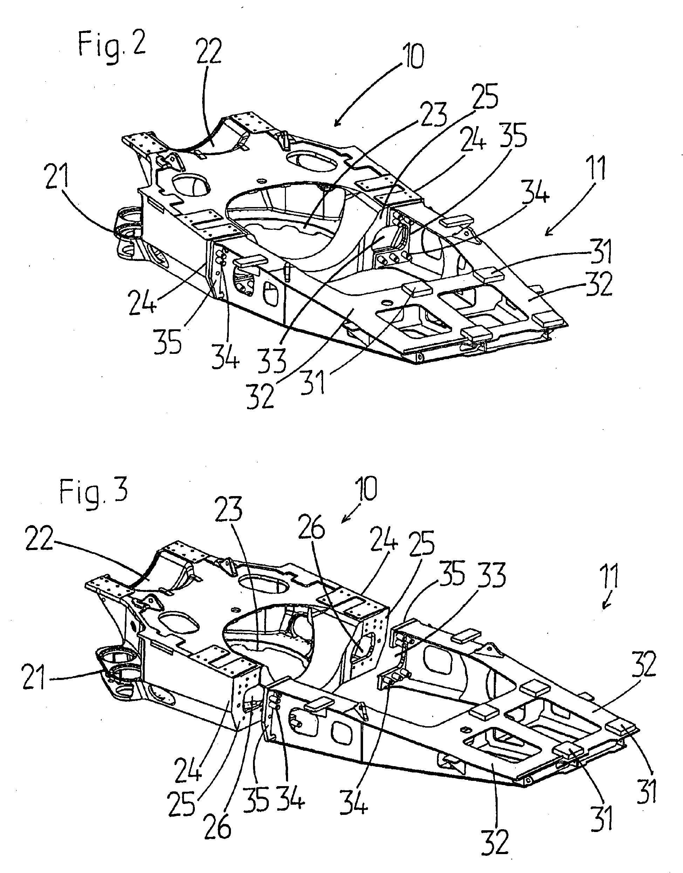

In Fig. 2 bis Fig. 6 ist ein erfindungsgemäßer Maschinenträger bzw. sind dessen Komponenten Hauptträger 10 und Heckträger 11 des Maschinenträgers jeweils im Detail schematisch dargestellt.

In Fig. 2 ist eine Perspektivdarstellung des Maschinenträgers dargestellt, wobei der Hauptträger 10 an seinem vorderen, also rotornabenseitigen Ende einen Lagerblock 22 für ein Rotor-Hauptlager aufweist. Seitlich hierzu schließen sich Halterungen 21 für Azimutantriebe 12 an. An der Unterseite ist ein Azimutflansch 23 mit einem nicht dargestellten Lochkreis für die Turmanbindung des Hauptträgers 10 erkennbar. Der Durchmesser des Lochkreises entspricht in grober Näherung dem Außendurchmesser des Turmes.

In Fig. 2 ist weiter zu sehen, dass sich längsseitig zwei symmetrische Verbindungsstücke 24 zu einem Heckträger 11 anschließen, die jeweils in einen Schraubenflansch 25 münden. In der dargestellten Ausführungsform besteht der Heckträger 11 aus zwei Hecktragarmen 32, die jeweils an einem der Verbindungsstücke 24 befestigt werden. Die vorliegende Erfindung erfasst auch den Fall, dass ein Heckträger 11 mit drei oder mehr Hecktragarmen 32 ausgeführt ist.

Der Heckträger 11 ist mit dem Hauptträger 10 über einen passenden Schraubenflansch 35, der auf dem Schraubenflansch 25 des Hauptträgers 10 aufliegt, mittels Verbindungsschrauben 34 verbunden, die auch Schraubbolzen sein können. Die Verbindungsstelle aus Schraubenflansch 25 und Schraubenflansch 35 weist, wie auf der rechten Seite von Fig. 2 zu sehen ist, eine allseits umschlossene Aussparung 33 auf, durch die Kabel und/oder Kabelstränge oder Kabelbäume hindurch geführt werden können.

Der auslegende Heckträger 11 weist am Ende der Tragarme 32 Standflächen 31 für Maschinenkomponenten, beispielsweise einen Generator, auf.

In Fig. 3 ist eine ähnliche Ansicht wie in Fig. 2 gezeigt, wobei Hauptträger 10 und Heckträger 11 in dieser perspektivischen schematischen Darstellung nicht miteinander verbunden sind. Es ist zu erkennen, dass der Schraubenflansch 25 des Hauptträgers 10 Aussparungen 26 aufweist an den Verbindungsstellen, die zueinander symmetrisch sind und allseits umschlossen sind. Die Schraubenflansche 35 des Heckträgers 11 weisen Aussparungen 33 auf, die an drei Seiten umschlossen sind, während die Aussparungen 33 nach innen offen sind. Die Schraubenflansche 35 des Heckträgers sind somit im Wesentlichen C-förmig.

Die Tragarme 32 sind, wie aus Fig. 3 ebenfalls erkennbar ist, im Querschnitt ebenfalls im Wesentlichen C-förmig. Damit können Kabel oder Kabelstränge innerhalb der C-förmigen Profile der Tragarme 32 des Heckträgers ebenso wie in den im Wesentlichen C-förmigen Profilen des Hauptträgers 10 sicher angeordnet und gehaltert werden.

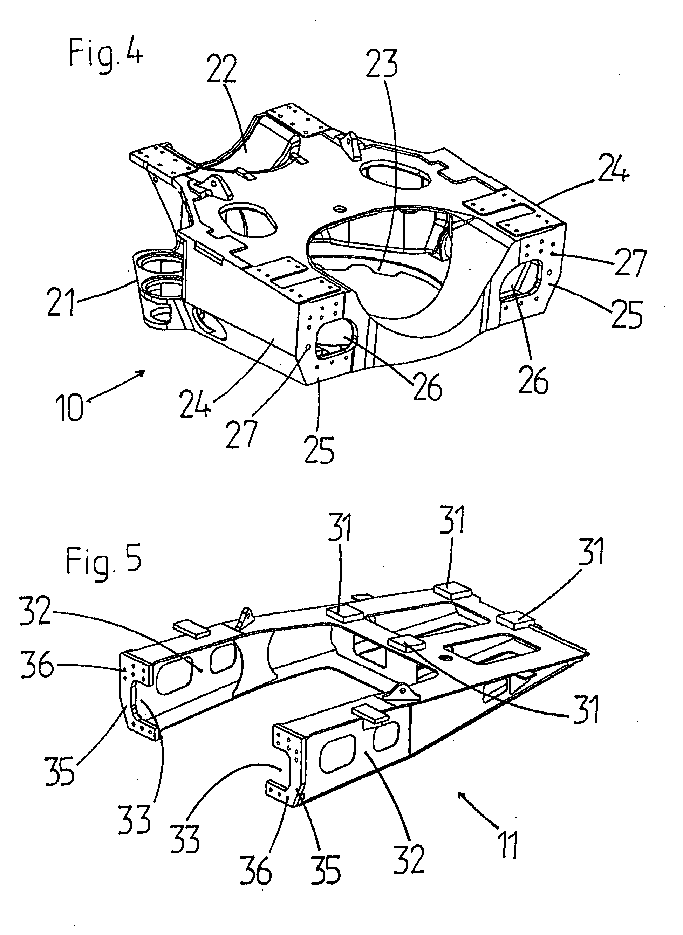

In Fig. 4 ist ein erfindungsgemäßer Hauptträger 10 im Detail dargestellt. Es ist erkennbar, dass die Schraubenflansche 25 eine im Wesentlichen formkomplementäre Form zu den Schraubenflanschen 35 eines dazu passenden Heckträgers 11 gemäß Fig. 5 aufweisen. Die Flächen der Schraubenflansche 25 und 35 sind im Wesentlichen eben und weisen an den entsprechenden Stellen Schraubenlöcher 36 für Verbindungsschrauben 34 auf.

Sowohl in dem Hauptträger 10 gemäß Fig. 4 als auch in dem Heckträger 11 gemäß Fig. 5 ist ausreichend Platz vorhanden, so dass eine Verlegung von Kabeln, Kabelsträngen und/oder Kabelbäumen, insbesondere vor dem Installieren in einer Gondel in einer Windenergieanlage, problemlos erfolgen kann. Die Länge eines kompletten Maschinenträgers mit Hauptträger 10 und Heckträger 11 ist in modernen Windenergieanlagen 10 m oder mehr.

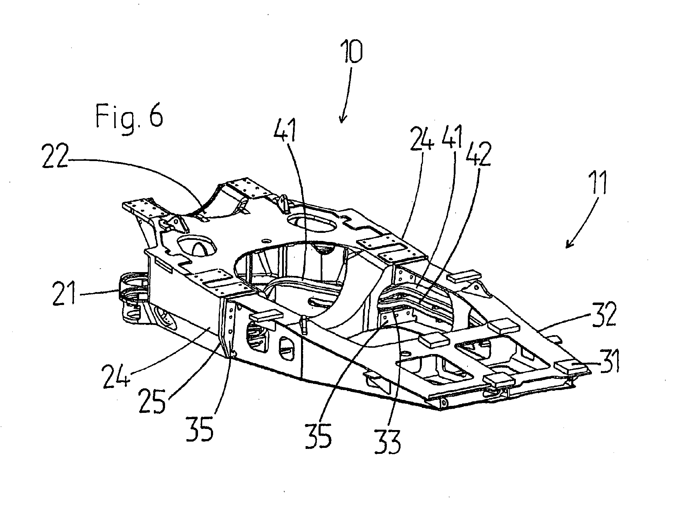

In Fig. 6 ist schließlich eine weitere schematische perspektivische Darstellung eines Maschinenträgers mit Hauptträger 10 und Heckträger 11 dargestellt wie in Fig. 2, wobei in diesem Fall Kabelschienen 41, 42 im Inneren des Maschinenträgers dargestellt sind.

Die übereinander angeordneten Kabelschienen 41, 42 beginnen am Heckträger 11 und verlaufen an einer Seitenwand des Heckträgers 11 in einem Tragarm 32 übereinander. Es handelt sich bei der dargestellten Form um geschlossene Kabelschienen 41, 42 mit jeweils einem abnehmbaren Deckel, in dem die Kabel bzw. Kabelstränge verlegt sind. Diese Kabelschienen zusammen mit den darin verlegten Kabeln und Kabelsträngen verlaufen durch die Aussparung an der Verbindungsstelle zwischen Heckträger 11 und Hauptträger 10. Je nach spezifischem Anwendungsfall werden statt der geschlossenen Kabelschienen auch offene Kabelstränge genutzt, was den Vorteil der einfacheren Zugänglichkeit und somit auch einfacheren Fehlersuche bietet. Die obere Kabelschiene 41 verläuft innerhalb des Hauptträgers 10 weiter bis zum Azimutflansch für die Turmanbindung, der in Fig. 6 nicht sichtbar ist, so dass die darin verlegten Leistungskabel in den Turm weiter verlaufen. Der Übergang in den Turm ist so gestaltet, dass eine ein- oder mehrmalige Drehung der Gondel auf dem Turm möglich ist.

Die untere Kabelschiene 42 verläuft ebenfalls durch die Aussparung aus dem Heckträger 11 in den Hauptträger 10 und enthält Steuerkabel, einschließlich Stromversorgungskabel für die elektrischen Komponenten auf dem Heckträger und verläuft innerhalb des Hauptträgers 10 getrennt von der Kabelschiene 41.

Die Kabelschienen 41, 42 können bereits vor Zusammenfügen von Hauptträger 10 und Heckträger 11 am Hauptträger und am Hauptträger 11 befestigt werden, so dass sie im Bereich der Verbindungsstelle aneinander stoßen, oder sie können nach Zusammenfügen von Hauptträger 10 und Heckträger 11 verlegt werden, so dass sie durch die Verbindungsstelle verlaufen. Mit den, insbesondere geschlossenen, Kabelschienen 41, 42 sind die Kabel, die darin verlegt sind, wirkungsvoll aus dem Weg geräumt und geschützt, so dass die Verkabelung gesichert ist und mehr Platz für Wartungsarbeiten und direkter Zugang zu den anderen Komponenten der Windenergieanlage auf dem Maschinenträger vorhanden ist.

### Bezuaszeichenliste

- 1: Gondel
- 2: Rotornabe
- 3: Rotorblattanschluss
- 4: Rotorblatt
- 5: Flansch
- 6: Lagerung der langsamen Rotorwelle
- 7: Getriebe
- 8: Generator
- 9: Schaltschrank
- 10: Hauptträger
- 11: Heckträger
- 12: Azimutantrieb
- 13: Turm
- 14: Blitzschutz
- 21: Halterung für Azimutantriebe
- 22: Lagerblock für Rotor-Hauptlager
- 23: Azimutflansch für Turmanbindung
- 24: Verbindungsstück zum Heckträger
- 25: Schraubenflansch
- 26: Aussparung
- 27: Schraubenloch
- 31: Standflächen
- 32: Tragarm
- 33: Aussparung
- 34: Verbindungsschraube
- 35: Schraubenflansch
- 36: Schraubenloch
- 41: Kabelschiene
- 42: Kabelschiene

## Patentansprüche

1. Maschinenträger (10, 11) einer Windenergieanlage mit Verkabelung, wobei der Maschinenträger (10, 11) einen Hauptträger (10) und einen Heckträger (11) aufweist, der an wenigstens einer Verbindungstelle mit dem Hauptträger (10) an dessen Heckseite verbunden ist, wobei die Verkabelung wenigstens ein Kabel und/oder wenigstens einen Kabelstrang mit Leistungskabeln und/oder mit Steuerkabeln aufweist, das und/oder der zwischen dem Hauptträger (10) und dem Heckträger (11) verlegt ist, **dadurch gekennzeichnet, dass** in der Verbindungsstelle eine Aussparung (26, 33) angeordnet ist, durch die das wenigstens eine Kabel und/oder der wenigstens eine Kabelstrang verlegt ist.

2. Maschinenträger (10, 11) nach Anspruch 1, **dadurch gekennzeichnet, dass** der Heckträger (11) mittels eines Schraubenflansches mit dem Hauptträger (10) verbunden ist oder an den Hauptträger (10) angeschweißt ist.

3. Maschinenträger (10, 11) nach Anspruch 1 oder 2, **dadurch gekennzeichnet, dass** ein Schraubenflansch (25, 35) oder eine Schweißverbindungsstelle eines Hauptträgers (10) oder eines Heckträgers (11) im Wesentlichen C-förmig, U-förmig oder als geschlossener Querschnitt mit allseits umschlossener Aussparung (26, 33) ausgeführt ist.

4. Maschinenträger (10, 11) nach einem der Ansprüche 1 bis 3, **dadurch gekennzeichnet, dass** an zwei gegenüberliegenden Seiten Verbindungsstellen zwischen Hauptträger (10) und Heckträger (11) angeordnet sind.

5. Maschinenträger (10, 11) nach Anspruch 4, **dadurch gekennzeichnet, dass** beide Verbindungsstellen Aussparungen (26, 33) mit hindurch verlegten Kabeln oder Kabelsträngen aufweisen, wobei insbesondere Leistungskabel und Steuerkabel getrennt voneinander durch verschiedene Verbindungsstellen verlegt sind.

6. Maschinenträger (10, 11) nach einem der Ansprüche 1 bis 5, **dadurch gekennzeichnet, dass** wenigstens ein Kabel eine Verbindungsstelle bruchlos durchläuft und/oder dass wenigstens ein Kabel im Heckträger (11) an oder im Bereich einer Verbindungsstelle mit einem Kabel im Hauptträger (10) mittels eines Steckkontakts verbunden ist.

7. Maschinenträger (10, 11) nach einem der Ansprüche 1 bis 6, **dadurch gekennzeichnet, dass** wenigstens eine Kabelschiene (41, 42) für den oder die Kabelstränge im Hauptträger (10) und/oder im Heckträger (11) angeordnet ist, wobei insbesondere die wenigstens eine Kabelschiene (41, 42) eine Verbindungstelle zwischen Hauptträger (10) und Heckträger (11) durchläuft oder eine Kabelschiene (41, 42) im Hauptträger (10) und eine Kabelschiene (41, 42) im Heckträger (11) an oder im Bereich einer Verbindungsstelle aufeinander stoßen.

8. Windenergieanlage mit einem Maschinenträger (10, 11) mit Verkabelung nach einem der Ansprüche 1 bis 7.

9. Verfahren zum Verlegen eines Kabels und/oder eines Kabelstrangs an einem Maschinenträger (10, 11) einer Windenergieanlage, insbesondere nach einem der Ansprüche 1 bis 7, wobei aus einem Hauptträger (10) und einem Heckträger (11) durch Verbinden an wenigstens einer Verbindungsstelle an einer Heckseite des Hauptträgers (10) ein Maschinenträger (10, 11) hergestellt wird, **dadurch gekennzeichnet, dass** durch eine Aussparung (26, 33) in der Verbindungsstelle wenigstens ein Kabel und/oder wenigstens ein Kabelstrang mit Leistungskabeln und/oder mit Steuerkabeln verlegt wird.

10. Verfahren nach Anspruch 9, **dadurch gekennzeichnet, dass** das Verbinden von Hauptträger (10) und Heckträger (11) durch Verschrauben von Schraubenflanschen (25, 35) oder durch Verschweißen erfolgt.

11. Verfahren nach Anspruch 9 oder 10, **dadurch gekennzeichnet, dass** mehrere Kabel und/oder Kabelstränge getrennt voneinander durch verschiedene Verbindungsstellen zwischen Hauptträger (10) und Heckträger (11) verlegt werden, insbesondere Leistungskabel getrennt von Steuerkabeln.

12. Verfahren nach einem der Ansprüche 9 bis 11, **dadurch gekennzeichnet, dass** wenigstens ein Kabel bruchlos durch eine Verbindungsstelle verlegt wird und/oder dass wenigstens ein Kabel im Hauptträger (10) mittels eines Steckkontakts an oder im Bereich der Verbindungsstelle mit wenigstens einem Kabel im Heckträger (11) verbunden wird.

13. Verfahren nach einem der Ansprüche 9 bis 12, **dadurch gekennzeichnet, dass** vor oder nach dem Verbinden von Hauptträger (10) und Heckträger (11) Kabelschienen (41, 42) für die Kabel und/oder Kabelstränge am Hauptträger (10) und/oder am Heckträger (11) befestigt werden, die Hauptträger (10) und/oder Heckträger (11) durchlaufen oder an oder im Bereich einer Verbindungsstelle zwischen Hauptträger (10) und Heckträger (11) aufeinander stoßen.

14. Verfahren nach einem der Ansprüche 9 bis 13, **dadurch gekennzeichnet, dass** das wenigstens eine Kabel und/oder der wenigstens eine Kabelstrang vor oder nach dem Verbinden von Hauptträger (10) und Heckträger (11) zum Maschinenträger (10, 11) durch die wenigstens eine Aussparung (26, 33) der wenigstens einen Verbindungsstelle verlegt wird.

15. Verfahren nach einem der Ansprüche 9 bis 14, **dadurch gekennzeichnet, dass** das Verlegen des wenigstens einen Kabels und/oder des wenigstens einen Kabelstrangs am Boden und/oder in einer Gondel einer Windenergieanlage erfolgt.

## Claims

1. A machine support (10, 11) for a wind turbine with cabling, wherein the machine support (10, 11) includes a main carrier (10) and a rear carrier (11), which is connected at at least one joint to the rear side of the main carrier (10), wherein the cabling includes at least one cable and/or at least one cable harness with power cables and/or with control cables, which is laid between the main carrier (10) and the rear carrier (11), **characterised in that** an opening (26, 33) is disposed in the joint, through which at least one cable and/or the at least one cable harness is laid.

2. A machine support (10, 11) as claimed in claim 1, **characterised in that** the rear carrier (11) is connected to the main carrier (10) by means of a screw flange or is welded to the main carrier (10).

3. A machine support (10, 11) as claimed in claim 1 or 2, **characterised in that** a screw flange (25, 35) or a weld joint of a main carrier (10) or of a rear carrier (11) is constructed substantially of C shape, U shape or as a closed cross-section with an opening (26, 33) surrounded on all sides.

4. A machine support (10, 11) as claimed in claims 1 to 3, **characterised in that** joints between the main carrier (10) and rear carrier (11) are disposed on two opposing sides.

5. A machine support (10, 11) as claimed in claim 4, **characterised in that** both joints have openings with cables or cable harnesses laid through them, wherein, in particular, power cables and control cables are laid separately from one another through different joints.

6. A machine support (10, 11) as claimed in claims 1 to 5, **characterised in that** at least one cable passes through a joint without interruption and/or that at least one cable in the rear carrier (11) is connected at or in the region of a joint with a cable in the main support (10) by means of a plug contact.

7. A machine support (10, 11) as claimed in claims 1 to 6, **characterised in that** at least one cable rail (41, 42) for the cable harness(es) is arranged in the main carrier (10) and/or in the rear carrier (11), wherein, in particular, the at least one cable rail (41, 42) passes through a joint between the main carrier (10) and rear carrier (11) or a cable rail (41, 42) in the main carrier (10) and a cable rail (41, 42) in the rear carrier (11) abut against one another at or in the region of a joint.

8. A wind turbine with a machine support (10, 11) with cabling as claimed in claims 1 to 7.

9. A method of laying a cable and/or a cable harness on a machine support (10, 11) for a wind turbine, particularly as claimed in one of claims 1 to 7, wherein a machine support (10, 11) is produced from a main carrier (10) and a rear carrier (11) by connecting them at at least one joint at a rear side of the main carrier (10), **characterised in that**:
at least one cable and/or at least one cable harness with power cables and/or with control cables is laid through an opening (26, 33) in the joint.

10. A method as claimed in claim 9, **characterised in that** the connection of the main carrier (10) and rear carrier (11) is effected by screwing screw flanges (25, 35) or by welding.

11. A method as claimed in claim 9 or 10, **characterised in that** a plurality of cables and/or cable harnesses are laid separately from one another through different joints between the main carrier (10) and rear carrier (11), particularly power cables separately from control cables.

12. A method as claimed in one of claims 9 to 11, **characterised in that** at least one cable is laid continuously through a joint and/or that at least one cable in the main carrier (10) is connected by means of a plug contact at or in the region of the joint to at least one cable in the rear carrier (11).

13. A method as claimed in one of claims 9 to 12, **characterised in that** before or after connecting the main carrier (10) and the rear carrier (11), cable rails (41, 42) for the cables and/or cable harnesses are connected to the main carrier (10) and/or the rear carrier (11), which pass through the main carrier (10) and/or rear carrier (11) or butt against one another at or in the region of a joint between the main carrier (10) and rear carrier (11).

14. A method as claimed in one of claims 9 to 13, **characterised in that** at least one cable and/or at least one cable harness is laid through the at least one opening (26, 33) at the at least one joint before or after connecting the main carrier (10) and rear carrier (11) to form the machine support.

15. A method as claimed in one of claims 9 to 14, **characterised in that** the laying of the at least one cable and/or of the at least one cable harness is performed on the ground and/or in a housing of a wind turbine.

## Revendications

1. Support de machine (10, 11) pour une installation éolienne avec un câblage, ledit support de machine (10, 11) comprenant un support principal (10) et un support arrière (11) qui est relié par au moins une jonction au support principal (10) sur son côté arrière, dans lequel le câblage comprend au moins un câble et / ou au moins un faisceau de câbles avec des câbles d'alimentation et / ou des câbles de commande, qui sont placés et / ou prévus entre le support principal (10) et le support arrière (11), **caractérisé en ce qu'**un évidement (26, 33) est agencé dans la jonction, à travers duquel au moins un câble et / ou au moins un faisceau de câbles sont acheminés.

2. Support de machine (10, 11) selon la revendication 1, **caractérisé en ce que** le support arrière (11), au moyen d'une bride à vis, est relié au support principal (10) ou est soudé au support principal (10).

3. Support de machine (10, 11) selon la revendication 1 ou la revendication 2, **caractérisé en ce qu'**une bride à vis (25, 35) ou une liaison par soudure d'un support principal (10) ou d'un support arrière (11) est sensiblement en forme de C, en forme de U ou est réalisée sous la forme d'une section transversale fermée avec des évidements (26,33) entièrement fermés.

4. Support de machine (10, 11) selon l'une quelconque des revendications 1 à 3, **caractérisé en ce que** des jonctions sont disposées entre le support principal (10) et le support arrière (11) sur deux côtés opposés.

5. Support de machine (10, 11) selon la revendication 4, **caractérisé en ce que** les deux jonctions comportent des évidements (26, 33) avec des câbles ou des faisceaux de câbles installés, en particulier, des câbles électriques et des câbles de commande sont acheminés séparément les uns des autres par diverses jonctions.

6. Support de machine (10, 11) selon l'une quelconque des revendications 1 à 5, **caractérisé en ce qu'**au moins un câble passe de manière transparente à travers une jonction et / ou qu'au moins un câble, dans le support arrière (11) ou dans la zone d'une jonction, est relié à un câble dans le support principal (10) au moyen d'un connecteur à fiches.

7. Support de machine (10, 11) selon l'une quelconque des revendications 1 à 6, **caractérisé en ce qu'**au moins un chemin de câbles (41, 42) est disposé pour le ou les faisceaux de câbles dans le support principal (10) et / ou dans le support arrière (11), dans lequel, en particulier, au moins un chemin de câbles (41, 42) passe à travers une jonction entre le support principal (10) et le support arrière (11) ou un chemin de câbles (41, 42) dans le support principal (10) et un chemin de câbles (41, 42) dans le support arrière (11) ou dans la zone de jonction se rejoignent.

8. Installation éolienne comprenant un support de machine (10, 11) comportant un câblage selon l'une des revendications 1 à 7.

9. Procédé de pose d'un câble et / ou d'un faisceau de câbles dans un support de machine (10, 11) d'une installation éolienne, en particulier selon l'une quelconque des revendications 1 à 7, dans lequel un support principal (10) et un support arrière (11) sont reliés par au moins une jonction sur un côté arrière du support principal (10) formant ainsi un support de machine (10, 11), **caractérisé en ce qu'**au mois un câble et / ou au moins un faisceau de câbles avec des câbles d'alimentation et / ou des câbles de commande sont acheminés par un évidement (26, 33) dans la jonction.

10. Procédé selon la revendication 9, **caractérisé en ce que** l'assemblage du support principal (10) et du support arrière (11) est réalisé par vissage d'une bride à vis (25, 35) ou par soudage.

11. Procédé selon la revendication 9 ou la revendication 10, **caractérisé en ce qu'**une pluralité de câbles et / ou de faisceaux de câbles, séparés les uns des autres par différentes jonctions, sont installés entre le support principal (10) et le support arrière (11), en particulier, les câbles d'alimentation sont séparés des câbles de commande.

12. Procédé selon l'une quelconque des revendications 9 à 11, **caractérisé en ce qu'**au moins un câble est acheminé de manière transparente à travers une jonction et / ou qu'au moins un câble, dans le support principal (10) ou dans la zone de jonction, est relié à au moins un câble dans le support arrière (11) au moyen d'un connecteur à fiches.

13. Procédé selon l'une quelconque des revendications 9 à 12, **caractérisé en ce qu'**avant ou après la connexion du support principal (10) et du support arrière (11), des chemins de câbles (41, 42) pour des câbles et / ou des faisceaux de câbles sont fixés sur le support principal (10) et / ou sur le support arrière (11), à travers le support principal (10) et / ou le support arrière (11) ou au niveau ou à proximité d'une jonction entre le support principal (10) et le support arrière (11).

14. Procédé selon l'une quelconque des revendications 9 à 13, **caractérisé en ce qu'**au moins un câble et / ou au moins un faisceau de câbles, avant ou après l'assemblage du support principal (10) et du support arrière (11) pour former le support de machine (10, 11), sont fixés à travers au moins un évidement (26, 33) d'au moins une jonction.

15. Procédé selon l'une quelconque des revendications 9 à 14, **caractérisé en ce que** la pose d'au moins un câble et / ou d'au moins un faisceau de câbles est effectuée au sol et / ou dans la nacelle d'une éolienne.
